# EUROPEAN PATENT APPLICATION

(11) **EP 4 764 861 A1**
(43) Date of publication of application: **24.06.2026**
(21) Application number: 24870260.7
(22) Date of filing: 23.08.2024
(51) Int. Cl.: G06F 9/54, G06F 12/02, G06F 21/53

(54) **SERIALIZATION-FREE COMMUNICATION METHOD, SYSTEM AND COMPUTER-READABLE STORAGE MEDIUM**

(30) Priority: 25.09.2023 CN 202311266052
(71) Applicant: HUAWEI TECHNOLOGIES CO., LTD., Shenzhen 518129 (CN)
(72) Inventor: SHAN, Wentao, Shenzhen, Guangdong 518129 (CN); TAN, Yihua, Shenzhen, Guangdong 518129 (CN); ZHOU, Yong, Shenzhen, Guangdong 518129 (CN)
(74) Representative: Goddar, Heinz J.
(86) International application number: PCT/CN2024/114321
(87) International publication number: WO 2025/066714

(57) **Abstract**

This application discloses a serialization-free communication method, a system, and a computer-readable storage medium. The serialization-free communication method is applied to a mobile terminal system, where the system includes a plurality of processes, and the plurality of processes communicate with each other via a shared kernel. The kernel is configured to: run a first sandbox program in a programmable sandbox environment, convert, into first data, an original memory address and metadata of a first object that are sent by a first process, and store the first data into a first buffer, where the first sandbox program is determined through matching from a plurality of sandbox programs based on the metadata of the first object; and send a start address of the first data in the first buffer to a second process, so that the second process determines a second object based on the start address of the first data in the first buffer. In the foregoing method, the sandbox program runs in the programmable sandbox environment, so that the serialization-free communication method is applicable to a complex communication scenario with user-defined serialization and deserialization logic, thereby ensuring security of a communication process and the kernel.

## Description

This application claims priority to Chinese Patent Application No. 202311266052.9, filed with the China National Intellectual Property Administration on September 25, 2023 and entitled "SERIALIZATION-FREE COMMUNICATION METHOD, SYSTEM, AND COMPUTER-READABLE STORAGE MEDIUM", which is incorporated herein by reference in its entirety.

### TECHNICAL FIELD

This application relates to the field of communication technologies, and in particular, to a serialization-free communication method, a system, and a computer-readable storage medium.

### BACKGROUND

Currently, to improve communication performance and reduce relatively large overheads generated in serialization/deserialization during inter-process communication, there exist a plurality of improvement solutions, such as reducing an amount of transmitted data and using a cache (cache) mechanism. However, these solutions are applicable to limited scenarios. Therefore, serialization-free communication technologies are further proposed. One of these serialization-free communication technologies allows a Java application to directly access a to-be-sent/received object via a remote direct data access (remote direct memory access, RDMA) or transmission control protocol (transmission control protocol, TCP) connection.

However, in the foregoing method, the to-be-sent object can be sent completely only. When original serialization and deserialization logic is not simple field copying, and has some special processing operations, there is a lack of support for such special processing, to be specific, support for user-defined object copying logic, and requirements of complex communication scenarios such as a Binder mechanism in an Android operating system cannot be met.

### SUMMARY

This application provides a serialization-free communication method, a system, and a computer-readable storage medium. A kernel runs a first sandbox program in a programmable sandbox environment, and copies a to-be-sent object from a transmit end to a receive end, so that the serialization-free communication method can be applied to a complex communication scenario with user-defined serialization and deserialization logic, thereby ensuring security of a communication process and the kernel.

According to a first aspect, this application provides a mobile terminal system. The system includes a plurality of processes, and the plurality of processes communicate with each other via a shared kernel. The kernel is configured to: run a first sandbox program in a programmable sandbox environment, determine first data based on an original memory address and metadata of a first object that are sent by a first process, and store the first data into a first buffer, where the first sandbox program is determined through matching from a plurality of sandbox programs based on the metadata of the first object, and the first buffer is a portion of a serialization-free memory block registered by a second process with the kernel. The kernel is further configured to send a start address of the first data in the first buffer to a second process, so that the second process determines a second object based on the start address of the first data in the first buffer, where the second object is applicable to the second process.

In conclusion, in the foregoing system, the kernel runs the first sandbox program in the programmable sandbox environment, and copies the to-be-sent object from the transmit end to the receive end, so that the serialization-free communication method can be applied to a complex communication scenario with user-defined serialization and deserialization logic, thereby ensuring secure isolation between the first process and the second process, and reducing security risks and maintenance costs caused by introduction of the user-defined serialization and deserialization logic as much as possible.

In a possible implementation, a programmable sandbox includes one or more loaded sandbox programs in a fixed directory of the system, and one or more sandbox programs that update the loaded sandbox program, where each of the one or more sandbox programs is generated based on serialization and deserialization logic of process communication. The sandbox program is generated based on the serialization and deserialization logic of the process communication and a memory layout file of the first object. After the sandbox program is injected into the programmable sandbox, the serialization-free communication method can be applied to a complex communication scenario with user-defined serialization and deserialization logic. The programmable sandbox can also isolate sandbox programs, to prevent the kernel from being attacked and ensure security. The foregoing updating the loaded sandbox programs can improve development efficiency. Specifically, the loaded sandbox programs may be updated by using a command line. Each of one or more sandbox programs injected into the programmable sandbox undergoes a security check. For example, whether the sandbox program has an infinite loop or the like is determined. If the sandbox program has an infinite loop or the like, the sandbox program is not injected into the programmable sandbox, thereby ensuring normal execution of a subsequent serialization-free communication process.

In a possible implementation, the kernel is specifically configured to: traverse the first object based on the first sandbox program and the original memory address of the first object, determine a total size of the first object, and determine a size of the first buffer, where the total size of the first object includes a size of the first object and a size of a sub-object referenced by the first object; run the first sandbox program in the programmable sandbox environment, and determine the first data based on the original memory address and the metadata of the first object that are sent by the first process; and store the first data into the first buffer. In the foregoing process, an appropriate buffer can be determined, and the first sandbox program runs in an isolated environment to support the user-defined serialization and deserialization logic, thereby ensuring security of the process and the kernel.

In a possible implementation, the kernel is specifically configured to: when a field in the first object is a common type field, store the common type field as the first data into the first buffer; or when a field in the first object is a reference type field, perform reference repair based on the first sandbox program and the size of the first object to determine a new reference field, and store the new reference field as the first data into the first buffer; or when a field in the first object is a type field and is different from a type field registered by the second process with the kernel, store a new address of a type corresponding to the second process as the first data into the first buffer, where the type corresponding to the second process is determined based on the type field in the first object. The first data includes one or more of a new object, an unprocessed common type field, a new reference type field obtained after special processing, or the new address of the type corresponding to the second process. The first data is determined based on the metadata of the first object and the first sandbox program, so that the user-defined serialization and deserialization logic can be applied in serialization-free communication.

In a possible implementation, before the kernel is configured to run the first sandbox program in the programmable sandbox environment, the second process is configured to: register, with the kernel, an address of first metadata and the serialization-free memory block including a serialization-free flag, where the first metadata is used to record a usage status of the serialization-free memory block, and is updated by the kernel. The second process performs serialization-free marking on the serialization-free memory block registered with the kernel, so that in a serialization-free communication process, the serialization-free memory block is neither used by the second process for memory allocation nor cleared by a garbage collection process running in the second process, thereby implementing a synchronization mechanism between the kernel and the second process. The kernel and the second process jointly manage the serialization-free memory block, thereby ensuring that there is always an available serialization-free memory block in the kernel, to write new data determined based on the to-be-sent object.

In a possible implementation, the second process is further configured to: when it is determined, based on the first metadata, that no data is written to the serialization-free memory block any more, register a new serialization-free memory block, and remove the serialization-free flag corresponding to the serialization-free memory block, so that the serialization-free memory block is reclaimed by a garbage collection (garbage collection, GC) process in the second process. The first metadata registered by the second process with the kernel may include size information of each memory block, status information of the memory block (for example, the memory block has been allocated or has not been allocated), information about a process allocated to the memory block, and the like. After the communication ends, and the kernel updates the first metadata, the second process determines, based on the updated first metadata, whether the memory block can continue receiving data in a subsequent communication process, so that when no data is written to the serialization-free memory block any more, the second process registers a new serialization-free memory block with the kernel, moves the serialization-free memory block to a to-be-cleared list, and removes a serialization-free flag corresponding to the serialization-free memory block in the to-be-cleared list. Therefore, the serialization-free memory block is cleared when a next garbage collection is performed.

In a possible implementation, the first process is further configured to: prevent execution of a garbage collection process in the first process, or delay execution of a reclaim phase of the garbage collection process in the first process. In the foregoing process, a synchronization mechanism between the first process and the kernel can be implemented in a serialization-free communication process, to ensure that the to-be-sent object is protected from being damaged by the garbage collection process, where for a specific process type of a garbage collection (for example, copying garbage collection (Copying GC)), a method for delaying a reclaim phase is used, which has lower overheads than those of a method for preventing a garbage collection process.

According to a second aspect, this application provides a serialization-free communication method. The method is applied to the mobile terminal system according to the first aspect. A plurality of processes sharing a kernel run in the mobile terminal system, and the plurality of processes communicate with each other via the kernel. The method includes: The kernel runs a first sandbox program in a programmable sandbox environment, converts, into first data, an original memory address and metadata of a first object that are sent by a first process, and stores the first data into a first buffer, where the first sandbox program is determined through matching from a plurality of sandbox programs based on the metadata of the first object, and the first buffer is a portion of a serialization-free memory block registered by a second process with the kernel. The kernel sends a start address of the first data in the first buffer to the second process, so that the second process determines a second object based on the start address of the first data in the first buffer, where the second object is applicable to the second process.

According to a third aspect, this application provides a communication device. The device runs the mobile terminal system according to the first aspect. The communication device includes a processor and a memory, and the processor is configured to execute instructions stored in the memory of the communication device, so that the communication device performs the method according to the second aspect.

According to a fourth aspect, this application provides a computer program product including instructions. When the instructions are run by a communication device, the communication device is enabled to perform the method according to the second aspect.

According to a fifth aspect, this application provides a computer-readable storage medium. The storage medium includes computer program instructions. When the computer program instructions are executed by a communication device, the communication device performs the method according to the second aspect.

Based on the implementations provided in the foregoing aspects, this application may further combine these implementations in this application, to provide more implementations.

### BRIEF DESCRIPTION OF DRAWINGS

To describe technical solutions in embodiments of this application more clearly, the following briefly describes accompanying drawings required for describing the embodiments.
FIG. 1 is a diagram of a serialization-free communication process in an inter-process communication scenario according to an embodiment of this application;
FIG. 2 is a diagram of a structure of a mobile terminal system according to an embodiment of this application;
FIG. 3 is a diagram of a structure of a communication device according to an embodiment of this application;
FIG. 4 is a flowchart of a serialization-free communication method according to an embodiment of this application;
FIG. 5 is a flowchart of a sandbox program generation method according to an embodiment of this application;
FIG. 6 is a work flowchart of an automatic sandbox program generator according to an embodiment of this application;
FIG. 7 is a flowchart of sandbox program injection according to an embodiment of this application;
FIG. 8 is a diagram of a process of a synchronization mechanism between a transmit-end process and a kernel according to an embodiment of this application;
FIG. 9 is a diagram of a temporal relationship between serialization-free communication and GCs according to an embodiment of this application;
FIG. 10 is a diagram of a process of delaying Reclaim according to an embodiment of this application; and
FIG. 11 is a diagram of a structure of a system that supports Binder communication between Java processes for serialization-free communication according to an embodiment of this application.

### DESCRIPTION OF EMBODIMENTS

Currently, in total overheads of binder communication, serialization/deserialization overheads account for a relatively large proportion, affecting communication performance. In order to reduce serialization/deserialization overheads during process communication, a plurality of improvement solutions, such as reducing an amount of transmitted data and using a cache (cache) mechanism, may be used. In a method for reducing an amount of transmitted data, two communication parties agree on some transmission rules, for example, sending only one copy of a redundant field, skipping sending a field type, performing data compression, or the like, to reduce an amount of data participating in serialization/deserialization, thereby reducing overheads. However, this method is applicable only to some scenarios in which there is a relatively large amount of redundant data or a relatively high transmission delay. In the cache (cache) mechanism, a call result is cached at a transmit end, to be directly used when a next call result is the same. This method is also applicable only to a scenario in which an inter-process communication call result changes little, and the cache consumes extra memory. Serialization-free communication technologies are further proposed, to resolve defects of the foregoing improvement solutions.

In one of these serialization-free communication technologies, an application may be enabled to directly access a to-be-sent/received object and metadata of the object via a remote direct data access (remote direct memory access, RDMA) or transmission control protocol (transmission control protocol, TCP) connection. In the foregoing process, the to-be-sent object may be sent completely to a remote end. However, when serialization/deserialization logic has special processing (for example, the to-be-sent object has defined its corresponding serialization/deserialization logic, where some fields do not participate in serialization/deserialization, or some repeated fields have been serialized/deserialized only once) in addition to simple field copying, user-defined serialization and deserialization logic cannot be supported in a serialization-free communication process, and a requirement of a complex communication scenario such as Android Binder cannot be met. In another serialization-free communication technology, memory spaces dedicated for serialization-free communication and having exactly consistent layouts are respectively pre-allocated to a sending process and a receiving process, and all type information related to serialization-free transmission is stored in the memory spaces similar to a distributed shared memory, which ensures that memory addresses for storing the information are exactly consistent, thereby implementing direct reading and writing of an object. This avoids a problem of a need for type repair and reference repair when an object address and a type address are changed by sending of the object. However, this method can implement only simple copying of an object, but cannot implement the foregoing function in a scenario with user-defined serialization and deserialization logic, and thus cannot meet a requirement of a complex communication scenario such as Android Binder, either.

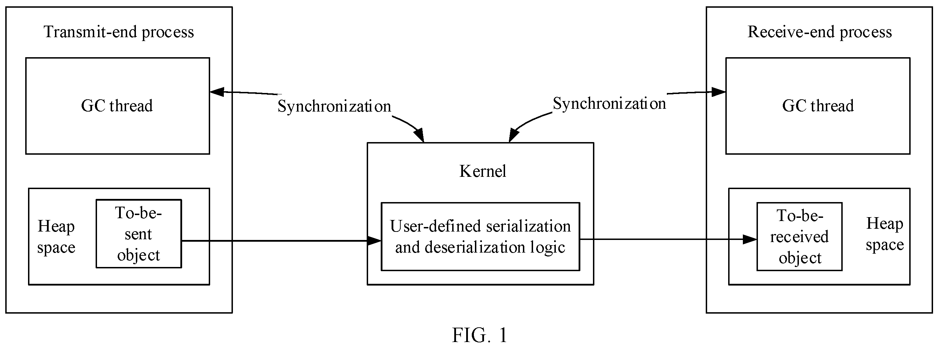

In addition to the foregoing two specific serialization-free communication technologies, an embodiment of this application provides a diagram of a serialization-free communication process in an inter-process communication scenario. Details are shown in FIG. 1. It may be determined, based on FIG. 1, that serialization-free communication includes the following steps: A receive-end process registers, with a kernel, a heap space for storing a to-be-received object in the serialization-free communication. A transmit-end process sends an address of a to-be-sent object in the heap space to the kernel. User-defined serialization and deserialization logic of the kernel copies the to-be-sent object to the heap space of the receive-end process, and sends an address of the to-be-received object in the heap space of the receive-end process to the receive-end process. Finally, the receive-end process determines a to-be-received object based on the address of the to-be-received object. It can be determined, by analyzing the foregoing steps, that inter-process communication involves a plurality of processes, which causes a problem of cross-process object data format compatibility. In addition to simple copying, the user-defined serialization and deserialization logic in the kernel has some special cases. Therefore, how to update user-defined logic needs to be taken into consideration. In addition, an execution process has a security problem, and thus how to prevent a crash of the kernel or another case caused by out-of-bounds access of the user-defined serialization and deserialization logic needs to be taken into consideration. In addition to the foregoing problems, the serialization-free communication technology also has a problem of synchronization between the kernel and a garbage collection (garbage collection, GC) process in the transmit-end process, and a problem of synchronization between the kernel and a garbage collection process in the receive-end process.

The foregoing two specific serialization-free communication technologies are applicable to a wide range of scenarios, so that serialization/deserialization overheads can be avoided, and communication performance can be greatly improved. In addition, in the first serialization-free communication method in which the to-be-sent/received object is directly accessed via the RDMA or TCP connection, the problem of synchronization between the kernel and the garbage collection process in each process may be resolved by preventing a memory block in which the to-be-sent object is located from participating in the garbage collection process and preventing the garbage collection process from modifying the to-be-received object. In the second serialization-free communication technology, all type information involved in a transmission process is stored in a dedicated memory space, and it is ensured that the same information is stored at identical addresses, so that the problem of cross-process object data format compatibility can be resolved. In addition, the problem of synchronization between the kernel and the process can be resolved by deeply copying the to-be-sent object to the dedicated memory space in advance. However, the foregoing two serialization-free communication technologies lack support for the user-defined serialization and deserialization logic, and cannot meet requirements of complex communication scenarios such as Android Binder.

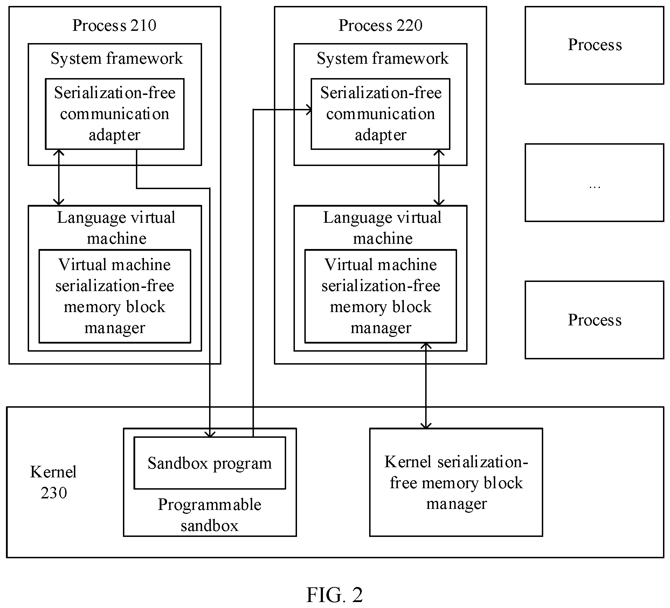

Therefore, this application provides a serialization-free communication method, to resolve the foregoing problem existing in the serialization-free communication process applied to the inter-process communication scenario. In the method, a sandbox program runs in a programmable sandbox environment via a kernel, so that in the serialization-free communication process, the user-defined serialization and deserialization logic can be supported, to meet requirements of complex communication scenarios such as Android Binder. The method is applied to a system shown in FIG. 2.

As shown in FIG. 2, FIG. 2 is a diagram of a structure of a mobile terminal system according to an embodiment of this application. The mobile terminal system includes a plurality of processes, such as a process 210 and a process 220, and a kernel 230. The plurality of processes communicate with each other via the shared kernel.

During specific implementation, each of the plurality of processes such as the process 210 and the process 220 includes a system framework and a language virtual machine. The system framework includes a process control block, program code, data, security and permission information, and the like, to manage and control execution of the process. The language virtual machine is configured to translate high-level programming language code into machine code and execute the machine code, and may provide functions such as a garbage collection and exception processing. A common language virtual machine includes a Java virtual machine (Java virtual machine, JVM), a JavaScript engine, and the like. In this embodiment of this application, the system framework further includes a serialization-free communication adapter. The serialization-free communication adapter is configured to modify serialization/deserialization code of a native inter-process communication interface, thereby adapting to serialization-free communication. The language virtual machine further includes a virtual machine serialization-free memory block manager. The virtual machine serialization-free memory block manager is configured to manage a heap space of the language virtual machine in collaboration with the kernel.

During specific implementation, the kernel is a core of a computer operating system, and is configured to manage computer hardware and provide a system service, to execute the process. In this embodiment of this application, the kernel further includes a programmable sandbox and a kernel serialization-free memory block manager. The programmable sandbox is an operating environment for executing an injected sandbox program (namely, user-defined serialization/deserialization logic), for example, a runtime environment of an extended Berkeley data packet filter (extended Berkeley packet filter, eBPF), to extend a function of the kernel, ensure security of the system, and prevent a crash of the kernel or another case caused by out-of-bounds access of the user-defined serialization and deserialization logic. The kernel serialization-free memory block manager is configured to manage the heap space of the language virtual machine in collaboration with the language virtual machine.

In a possible implementation, when the process 210 is a transmit-end process, and the process 220 is a receive-end process, the process 220 dynamically registers a serialization-free memory block with the kernel serialization-free memory block manager via a corresponding virtual machine serialization-free memory block manager, or releases a previously registered serialization-free memory block. The process 210 obtains an original memory address and metadata of a to-be-sent first object via a corresponding language virtual machine, and then sends the original memory address and the metadata of the first object to the kernel via a corresponding serialization-free communication adapter. The kernel is configured to run a first sandbox program in a programmable sandbox environment, convert the received original memory address and metadata of the first object into first data, and store the first data into a first buffer in a serialization-free memory block pre-registered by the process 220, where the first sandbox program is determined through matching from a plurality of loaded sandbox programs based on the metadata of the first object. The kernel is further configured to send a start address of the first data in the first buffer to the process 220, so that the process 220 converts the start address of the first data in the first buffer into a second object via a corresponding language virtual machine, and provides the second object for a corresponding system framework to use. When the process 210 is a receive-end process, and the process 220 is a transmit-end process, a specific process is similar to the foregoing content, and details are not described herein again.

In addition to the foregoing content, the kernel further includes an inter-process communication module and the like, and the process further includes an inter-process communication call library module and the like. It should be noted that FIG. 2 is merely a possible implementation of this embodiment of this application. During actual application, the foregoing mobile terminal system may alternatively include more or fewer components. This is not limited herein.

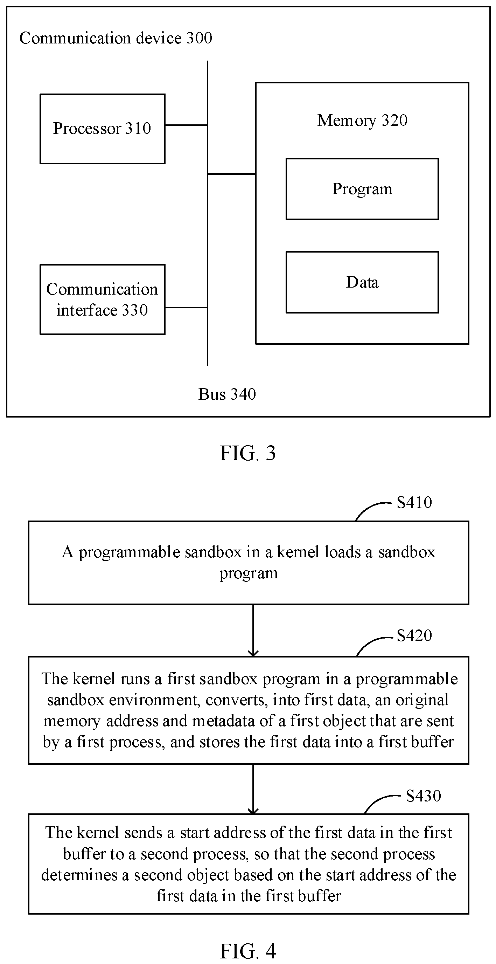

During specific implementation, the mobile terminal system is a communication device running a plurality of processes, for example, a mobile phone (mobile phone), a tablet computer (pad), a desktop computer, or the like. In addition to the software part shown in FIG. 2, a hardware structure is shown in FIG. 3. FIG. 3 is a diagram of a structure of a communication device according to this application. The communication device may be applied to the system shown in FIG. 1. The communication device 300 includes: a processor 310, a memory 320, a communication interface 330, and a bus 340, where the processor, the memory, and the communication interface may be connected by using the bus.

The processor 310 may include at least one general-purpose processor, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 310 is configured to execute various types of digital storage instructions.

The memory 320 may be a volatile memory (volatile memory), for example, a random access memory (random access memory, RAM), a dynamic random access memory (dynamic RAM, DRAM), a static random access memory (static RAM, SRAM), a synchronous dynamic random access memory (synchronous dynamic RAM, SDRAM), a double data rate synchronous dynamic random access memory (double data rate RAM, DDR), a cache (cache), or the like. The memory may alternatively include a combination of the foregoing types. The memory 320 includes program code. The processor 310 may implement, by executing the program code, all steps corresponding to the foregoing kernel and process, thereby implementing inter-process serialization-free communication.

The bus 340 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 3, but this does not mean that there is only one bus or only one type of bus. The bus 340 may include a path for transmitting information between various components (for example, the processor 310, the memory 320, and the communication interface 330) of the communication device 300.

It should be noted that FIG. 3 merely shows a possible implementation of embodiments of this application. During actual application, the communication device may alternatively include more or fewer components. This is not limited herein.

As shown in FIG. 4, FIG. 4 is a flowchart of a serialization-free communication method according to an embodiment of this application. The method is applied to the system shown in FIG. 2, and the method includes the following steps.

Step S410: A programmable sandbox in a kernel loads a sandbox program.

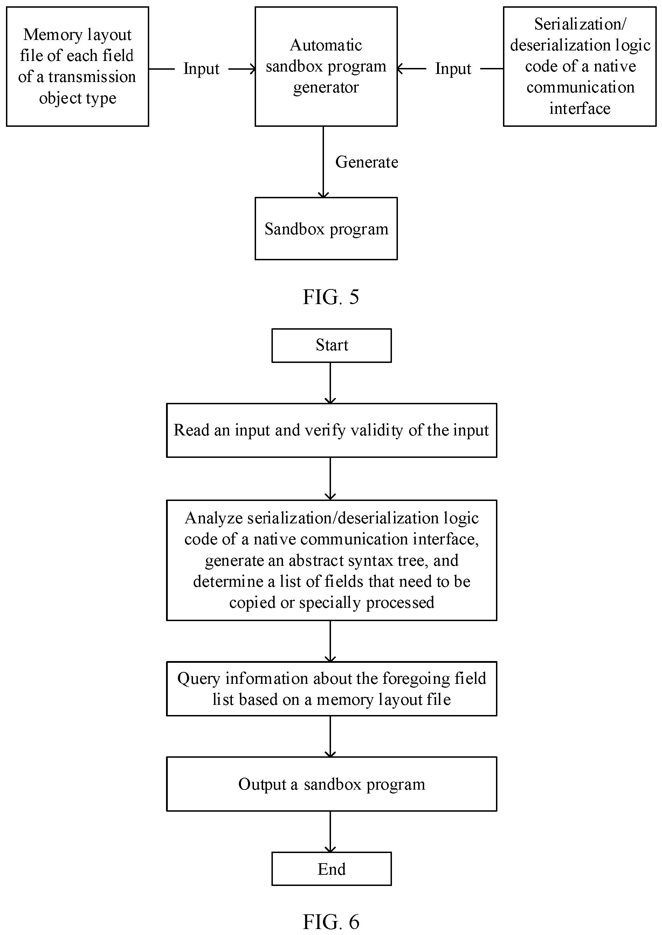

The sandbox program loaded by the programmable sandbox in the kernel is generated by a developer on a server or a debugging-purpose mobile terminal by using an automatic sandbox program generator based on a memory layout file of each field of a transmission object type and serialization/deserialization logic code of a native communication interface. As shown in FIG. 5, FIG. 5 is a flowchart of a sandbox program generation method according to an embodiment of this application. The memory layout file of each field of the transmission object type may be exported from the mobile terminal, and may be a file in a JSON format, including a name of the field, type information, an offset relative to a start address of an object, a memory occupation size, and the like. In a possible implementation, the memory layout file varies with different operating system versions or different mobile terminal types, so that generation of a new sandbox program is required. The serialization/deserialization logic code of the native communication interface is used to provide a path of native serialization/deserialization related code in Android source code. When the serialization/deserialization logic code changes, a new sandbox program needs to be generated. After the memory layout file of each field of the transmission object type and the serialization/deserialization logic code of the native communication interface are input into the automatic sandbox program generator, the sandbox program can be generated.

As shown in FIG. 6, FIG. 6 is a work flowchart of an automatic sandbox program generator according to an embodiment of this application. After starting execution, the automatic sandbox program generator reads an input and verifies validity of the input, where the input is a memory layout file of each field of a transmission object type and serialization/deserialization logic code of a native communication interface. After successful validity verification of the input, the automatic sandbox program generator analyzes the serialization/deserialization logic code of the native communication interface, generates an abstract syntax tree, and determines a list of fields that need to be copied or specially processed. Because the memory layout file includes information such as a name of each field, type information, an offset relative to a start address of an object, and a memory occupation size, the automatic sandbox program generator queries information about the foregoing field list based on the memory layout file, thereby determining user-defined serialization/deserialization logic, outputting a sandbox program, and ending the execution. The foregoing sandbox program generation method can efficiently and accurately determine the user-defined serialization/deserialization logic, which is used in a corresponding serialization-free communication process.

When the kernel is enabled, the programmable sandbox in the kernel loads one or more sandbox programs in a fixed directory of the system, and loads one or more sandbox programs that update the loaded sandbox program, where an updated sandbox program is generated by updating or replacing the loaded sandbox program by using a command line, so that development efficiency can be improved. The programmable sandbox includes one or more sandbox programs. This is not specifically limited in this application.

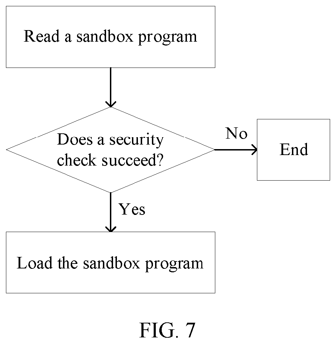

In a possible implementation, when the programmable sandbox loads the sandbox program, it is also necessary to perform a security check on the sandbox program, to determine whether an infinite loop or the like exists. When there is an infinite loop or the like, injection of the sandbox program is ended, thereby ensuring security of the sandbox program. Specifically, as shown in FIG. 7, FIG. 7 is a flowchart of sandbox program injection according to an embodiment of this application. After the sandbox program is read, it is determined whether a security check succeeds. When the security check does not succeed, loading of the sandbox program is ended. When the security check succeeds, the sandbox program is loaded, so that the sandbox program is executed in a subsequent serialization-free communication process.

In a user mode, user-defined serialization/deserialization logic is loaded to a programmable sandbox in a kernel in a form of a sandbox program, so that the user-defined serialization/deserialization logic can be introduced into a serialization-free communication process, thereby meeting a requirement of a complex communication scenario. In addition, the programmable sandbox can ensure secure isolation between processes.

Step S420: The kernel runs a first sandbox program in a programmable sandbox environment, converts, into first data, an original memory address and metadata of a first object that are sent by a first process, and stores the first data into a first buffer.

In a possible implementation, the first process first sends the original memory address and the metadata of the first object to the kernel. As a transmit-end process, the first process obtains the original memory address and the metadata of the to-be-sent first object from a heap space of a corresponding language virtual machine, generates an inter-process communication data packet based on the original memory address and the metadata of the first object, and writes the inter-process communication data packet into a to-be-sent byte stream buffer in an inter-process communication call library. The first process initiates a system call, and requests the kernel to send a communication message to a second process at a receive end, so that the second process registers a serialization-free memory block with a kernel serialization-free memory block manager in the kernel by using a serialization-free memory block manager in the corresponding language virtual machine, or releases a previously registered serialization-free memory block.

The kernel parses the inter-process communication data packet in the to-be-sent byte stream buffer, obtains the original memory address and the metadata of the first object, and selects the matched first sandbox program from the plurality of sandbox programs in the programmable sandbox based on the metadata of the first object, for example, type information of the first object. The kernel traverses the first object based on the first sandbox program and the original memory address of the first object, and determines a total size of the first object. When there is a reference field in the process of traversing the first object, deep traversal needs to be performed; and a size of a sub-object is also considered in the total size of the first object. After determining the total size of the first object, the first sandbox program accesses an interface of the kernel serialization-free memory block manager, and transfers the total size of the first object, to determine a size of a first buffer allocated in a pre-registered serialization-free memory block, thereby implementing appropriate and effective allocation of the memory block and improving utilization.

The kernel runs the first sandbox program in the programmable sandbox environment, and there are a plurality of cases in a process of converting, into the first data, the original memory address and the metadata of the first object that are sent by the first process. In a possible implementation, the first sandbox program traverses the first object again based on the original memory address of the first object. When it is determined that a field in the first object is a common type field, the common type field is directly copied to the first buffer without conversion, where the common type field may be an integer, a string, or the like.

In another possible implementation, when it is determined that a field in the first object is a reference type field, the first sandbox program needs to perform reference repair on the field to determine a new reference field, and copy the new reference field to the first buffer, thereby ensuring that reference points to a new object, where the reference field stores reference to another object and is used to establish a connection relationship between objects. During the foregoing reference repair, the first sandbox program calculates a size of the first object itself (excluding a size of a referenced sub-object), which is used to calculate an offset in the reference repair, thereby determining a new object address in the first buffer.

In another possible implementation, when a field in the first object is a type field, and is different from a type field registered by the second process with the kernel, the first sandbox program performs type repair, and stores a new address of a type corresponding to the second process into the first buffer. During the foregoing type repair, the first sandbox program determines, based on the type field in the first object, a type of an object that needs to be created by the second process, allocates a space of the new object in a memory based on determined type information, obtains a memory address of the new object, and writes the memory address of the new object into the first buffer.

In conclusion, the first data includes one or more of the new object, an unprocessed common type field, a new reference type field obtained after special processing, or the new address of the type corresponding to the second process. This is not specifically limited in this application. In the foregoing process, the first sandbox program copies a useful field to a buffer, or processes an original field and then writes a processed field into the first buffer, so that it can be ensured that the second process reads a correct object in a subsequent serialization-free communication process, thereby supporting the user-defined serialization and deserialization logic.

The kernel executes the sandbox program (namely, the user-defined serialization and deserialization logic) in the programmable sandbox, so that the sandbox program can be isolated, a crash of the kernel or another case caused by out-of-bounds access of the user-defined serialization and deserialization logic can be prevented, security of the process and the kernel can be ensured, and a serialization-free communication mechanism can be applied to a complex scenario with user-defined serialization/deserialization logic.

In a possible implementation, during initialization and execution of the foregoing serialization-free communication, a virtual machine serialization-free memory block manager and a kernel serialization-free memory block manager jointly manage a memory block used for serialization-free copying. The virtual machine serialization-free memory block manager in the second process not only registers the serialization-free memory block with the kernel serialization-free memory block manager, but also registers an address of first metadata with the kernel serialization-free memory block manager, to implement message communication between the kernel and the second process. The kernel records a start address and a length of a registered serialization-free memory block. The first metadata is data reserved by the second process in the language virtual machine, is used to record a usage status of the serialization-free memory block, and includes a status of the memory block, a size of the memory block, an owner of the memory block, a usage status, a metadata version, and the like. This is not specifically limited in this application. The kernel updates the first metadata each time before inter-process serialization-free communication ends. After the serialization-free communication ends, the second process initiates an asynchronous task when it is determined, based on the first metadata, that data cannot be written into the serialization-free memory block any more. The asynchronous task is used to perform registration and clearing of a serialization-free memory block. The second process registers a new serialization-free memory block with the kernel serialization-free memory block manager, and moves, to a to-be-cleared list, a serialization-free memory block into which data cannot be written any more. When no garbage collection process is being executed, the second process removes a serialization-free flag of the serialization-free memory block in the to-be-cleared list, and then clears the to-be-cleared list, so that the memory block whose serialization-free flag is removed is cleared when a garbage collection process is executed next time. The foregoing content is a specific process of a collaborative memory management mechanism between the kernel and the language virtual machine in the process. This process can ensure that in the kernel, there is always a serialization-free memory block into which new data can be written, so that the kernel has a capability of generating a new object.

In a possible implementation, because application programs of different versions or different programming languages correspond to different type fields, in a process of traversing the first object, the kernel performs a type security check to check whether each type field of the new object matches type information pre-registered by the second process with the kernel, thereby preventing a running error of the language virtual machine corresponding to the second process, and ensuring security of communication.

In a possible implementation, when none large-enough buffer can be allocated or a type security check fails in the foregoing process, current inter-process communication is interrupted, and retransmission of data is attempted automatically in the mobile terminal system, so that integrity and availability of the data are ensured.

Step S430: The kernel sends a start address of the first data in the first buffer to a second process, so that the second process determines a second object based on the start address of the first data in the first buffer.

After the kernel writes the first data such as the determined new object into the first buffer based on the first sandbox program and the original memory address and the metadata of the first object that are sent by the first process, and determines that the type security check for the type field of the new object succeeds, the kernel sends the start address of the first data in the first buffer to the second process, that is, the kernel writes the start address of the first data in the first buffer into a to-be-received byte stream buffer of an inter-process communication call library of the second process via an inter-process communication module. The language virtual machine in the second process reads a new object address and metadata that are written by the kernel into the to-be-received byte stream buffer, and converts the new object address and the metadata into the second object based on a modified object generation procedure. The second object is a common managed language object, and may be used by a system framework of the second process via a serialization-free communication adapter corresponding to the second process, to complete current inter-process communication.

In conclusion, according to the serialization-free communication method provided in this embodiment of this application, the kernel runs the sandbox program (namely, the user-defined serialization and deserialization logic) in the programmable sandbox environment, so that the user-defined serialization and deserialization logic can be supported during serialization-free communication, thereby meeting requirements of complex communication scenarios such as Android Binder. In addition, according to the method provided in this application, the user-defined serialization and deserialization logic is offloaded to the kernel, thereby ensuring security of the kernel.

In addition to the foregoing specific inter-process communication steps, during serialization-free communication, because a to-be-sent object in the transmit-end process is modified by a garbage collection process, an error occurs in a process of copying a sandbox program, and consequently a problem such as a communication failure or a data exception is caused. Therefore, synchronization between the transmit-end process and the kernel also needs to be taken into consideration.

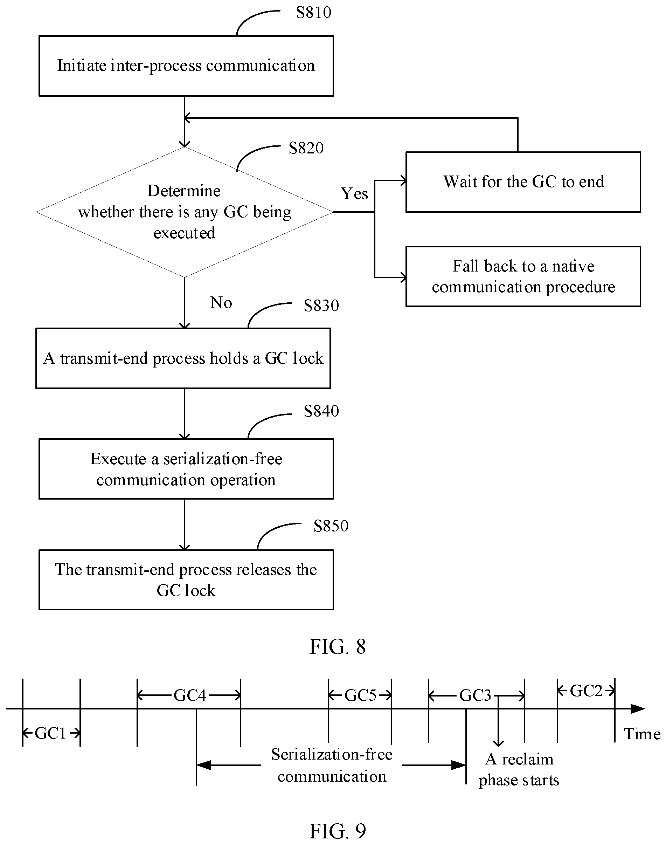

In a possible implementation, the transmit-end process prevents the transmit-end language virtual machine from performing a garbage collection during serialization-free communication, to implement synchronization between the transmit-end process and the kernel. As shown in FIG. 8, FIG. 8 is a diagram of a process of a synchronization mechanism between a transmit-end process and a kernel according to an embodiment of this application. The synchronization mechanism includes the following steps.

Step S810: Initiate inter-process communication.

Step S820: Determine whether there is any GC being executed.

When there is a GC being executed, the transmit-end process waits for the GC to end, and performs determining again until it is determined that there is no GC being executed, or falls back to a native communication procedure. This is not specifically limited in this application.

Step S830 is performed when it is determined, by determining a garbage collection status for the first time or redetermining a garbage collection status, that there is no GC being executed.

Step S830: The transmit-end process holds a GC lock.

The transmit-end process obtains the GC lock and continuously holds the GC lock, thereby preventing execution of a garbage collection.

Step S840: Execute a serialization-free communication operation.

When the transmit-end process holds the GC lock, the transmit-end process continues to execute a step related to serialization-free communication.

Step S850: The transmit-end process releases the GC lock.

When the serialization-free communication ends, the transmit-end process releases the GC lock, so that a language virtual machine of the transmit-end process starts to normally execute a garbage collection process.

In another possible implementation, the transmit-end process marks a to-be-sent object in the language virtual machine of the transmit-end process during the serialization-free communication, to prevent the to-be-sent object from participating in the garbage collection process. When the to-be-sent object includes a reference field, the language virtual machine marks, in a same way, an object to which the reference field points, to prevent the object to which the reference field points from participating in the garbage collection process.

Because the foregoing method has a relatively great impact on preventing execution of the garbage collection process, this application provides another manner of synchronizing a transmit-end process with a kernel. When the language virtual machine of the transmit-end process is a Java language virtual machine or an ART (Android runtime) virtual machine in an Android system, a more efficient garbage collection algorithm is introduced into the ART virtual machine, for example, a generational garbage collection or a Copying GC. A Copying GC focuses on a garbage collection of a Java heap space memory. The Java heap space memory is divided into a source space (From space) and a target space (To space). The two spaces are flipped each time before the GC starts. A garbage object is not reclaimed directly during execution of the GC. Instead, a useful object is copied from the From space to the To space, and the From space is cleared completely when the GC is about to end, thereby implementing a garbage collection of a Java heap space. According to the foregoing process, it can be determined that a to-be-reclaimed object is cleared only in a reclaim phase (Reclaim Phase) when the GC is about to end. Therefore, in this application, synchronization between the kernel and the ART virtual machine is implemented in a manner of delaying Reclaim. In this process, provided that no Reclaim Phase is performed, no access error occurs even if a to-be-reclaimed object is accessed.

FIG. 9 is a diagram of a temporal relationship between serialization-free communication and GCs according to an embodiment of this application. As shown in FIG. 9, in a possible implementation, when a language virtual machine in a transmit-end process is an ART virtual machine, and all executed GCs are of a Copying GC type, because GC1 and GC2 do not overlap with a serialization-free communication process in terms of time, no impact on the serialization-free communication process is caused. Although GC3 overlaps with the serialization-free communication in terms of time, because a Reclaim Phase occurs after the serialization-free communication ends, no impact is caused, either. However, a Reclaim Phase of GC4 may occur in the serialization-free communication process, and a Reclaim Phase of GC5 definitely occurs in the serialization-free communication process. Therefore, GC4 and GC5 may clear or modify a to-be-sent object in a transmit-end process. As a result, an error occurs during copying of a sandbox program, which causes a communication failure, a data exception, or another problem. According to the foregoing example, it may be determined that synchronization between the transmit-end process and a kernel can be implemented, provided that no Reclaim Phase is performed in the serialization-free communication process.

The transmit-end process presets two global count values cnt1 and cnt2, and one global count address cnt Address. The address may be a memory address of cnt1 or cnt2. Each time serialization-free communication starts, a serialization-free communication thread records an address cnt Address Local of cnt Address, increases a global count value corresponding to cnt Address Local by 1, and decreases the global count value corresponding to cnt Address Local by 1 at an end moment of the communication. Each time before a Reclaim Phase starts, the GC thread records an old global count value address cnt Address Previous, and assigns an address of the other global count value to cnt Address. The old cnt Address Previous in the foregoing process indicates that the serialization-free communication thread is still using an object that may be reclaimed in this garbage collection, and an object used by a serialization-free communication thread that starts after the address of the other global count value is assigned to cnt Address is not considered in this garbage collection. A garbage collection process does not start a Reclaim Phase until a count value to which cnt Address Previous points becomes 0. At each end moment of serialization-free communication, a transmit-end thread of the serialization-free communication may further check whether a count value to which points cnt Address Local becomes 0. If the count value is 0, a GC thread is notified by using a semaphore. In this case, if the GC thread is waiting, before a Reclaim Phase, for the count value to return to 0, the GC thread exits the waiting and performs the Reclaim Phase.

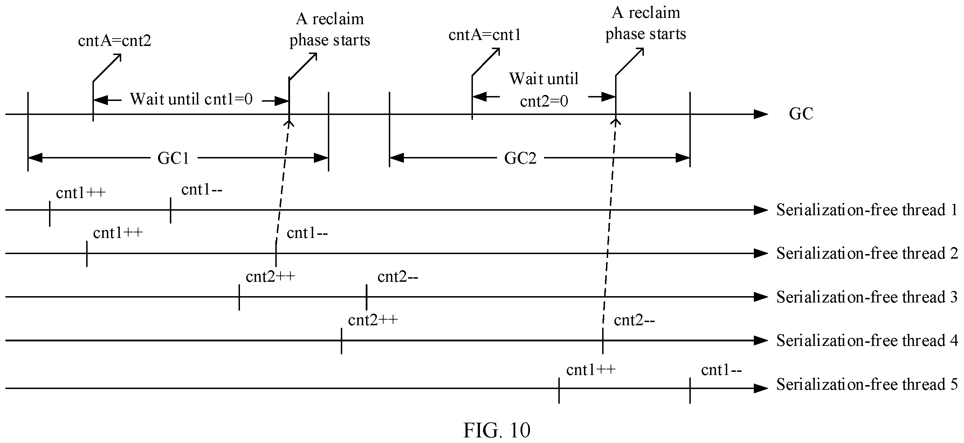

In a specific implementation, as shown in FIG. 10, FIG. 10 is a diagram of a process of delaying Reclaim according to an embodiment of this application. During execution of GC1, before a Reclaim Phase starts, GC1 records an old global count value address cnt Address Previous. In this case, cnt Address Previous is a memory address of cnt1, and a memory address of cnt2 is assigned to cnt Address. Before GC1 assigns the memory address of cnt2 to cnt Address, a serialization-free thread 1 and a serialization-free thread 2 have started execution. Therefore, GC1 needs to wait for the serialization-free thread 2 to end, and then starts to perform a reclaim phase. Specifically, when the serialization-free thread 1 starts, the serialization-free thread 1 determines that cnt Address Local at this time is a memory address of cnt1, increases cnt1 by 1, and determines that the global count value cnt1 = 1. Then, the serialization-free thread 2 starts, increases cnt1 by 1 again, and determines that the global count value cnt1 = 2. Then, the serialization-free thread 1 ends, decreases cnt1 by 1, and determines that the global count value cnt1 = 1. Then, the serialization-free thread 2 ends, decreases cnt1 by 1, and determines that the global count value cnt1 = 0. In this case, a global count value to which cnt Address Local points is 0, that is, cnt1 is 0, and GC1 is notified, so that GC1 starts to perform the Reclaim Phase. In a subsequent process, before GC2 assigns the memory address of cnt1 to cnt Address, a serialization-free thread 3 and a serialization-free thread 4 in which cnt Address Local is the memory address of cnt2 have started execution. Therefore, a Reclaim Phase of GC2 does not start execution until both the serialization-free thread 3 and the serialization-free thread 4 end, that is, collection does not start until cnt2 is 0. A specific process is similar to the foregoing process, and details are not described in this application herein again. Similarly, an object used by a serialization-free thread 5 needs to wait for reclamation by a garbage collection thread executed after GC2. In the foregoing manner, execution of a reclaim phase of a garbage collection can be delayed, thereby ensuring the synchronization between the process and the kernel.

In addition to delaying the Reclaim Phase, the following cases also need to be taken into consideration, to ensure the synchronization between the transmit-end process and the kernel: An allocation problem of a new object exists during execution of a garbage collection, allocation of a new object causes distortion of old data, and so on. In a specific implementation, as shown in FIG. 9, temporal overlap exists between an execution interval of GC4 and a serialization-free communication process. In the execution interval of GC4, a new object is allocated. Initially, Object-A has a reference field b, and b is null. In the communication process, a thread allocates a new object Object-B, and sets a reference of Object-A.b to an address of the new object Object-B, so that data of the to-be-sent object Object-A is modified. In addition, when an ongoing serialization-free communication process accesses Object-A, an old object before modification may be accessed, that is, Object-A.b is null.

This application provides another manner of synchronizing a transmit-end process with a kernel, to resolve the foregoing problem. In a manner of following a To space invariant in the serialization-free communication process, the following is implemented during execution of GC: Only an object in a To space can be accessed by the serialization-free communication process, and an object in a From space is considered invalid or inaccessible. In a process of accessing an object in the To space, when a reference object has a forwarding pointer (Forwarding pointer), a new object stored in the Forwarding pointer is preferentially accessed. The Forwarding pointer is a technology used to track object migration and redirect reference in a garbage collection. A Forwarding pointer including a new object address is left in metadata in the To space, to ensure that all objects finally accessed by upper-layer code are new objects. In a specific implementation, the foregoing modification to the data of Object-A is used as an example for description. In a process of accessing Object-A in the To space, a reference object has a Forwarding pointer, and the Forwarding pointer points to the address of the new object Object-B, thereby ensuring that even if a new object is allocated, only the new object is accessed during serialization-free communication. In the foregoing process, when old Object-A.b is not null and is an address of Object-C, after the new object is allocated, a garbage collection process reserves the address of Object-C in the From space, and finally performs reclamation.

In addition to a problem of the synchronization between the transmit-end process and the kernel, a synchronization mechanism between a receive-end process and the kernel also needs to be considered, because during serialization-free communication, a serialization-free memory block pre-registered by the receive-end process with the kernel is not used for memory allocation or is reclaimed by the garbage collection process. Synchronization between the receive-end process and the kernel may be resolved by performing serialization-free marking on a serialization-free memory block registered with the kernel. A serialization-free memory block having a serialization-free flag can be prevented from being reclaimed by the garbage collection process, but can allow a garbage collection process to access an object on the serialization-free memory block and complete garbage collection scanning, thereby avoiding a problem that a useful field is reclaimed due to missed scanning.

In a possible implementation, when a reference field of an object A on a serialization-free memory block points to an object B, and the object B is on a common memory block, the garbage collection process continues to scan the object B after scanning the object A, and marks the object B as a useful object, too, thereby avoiding reclamation of the object B.

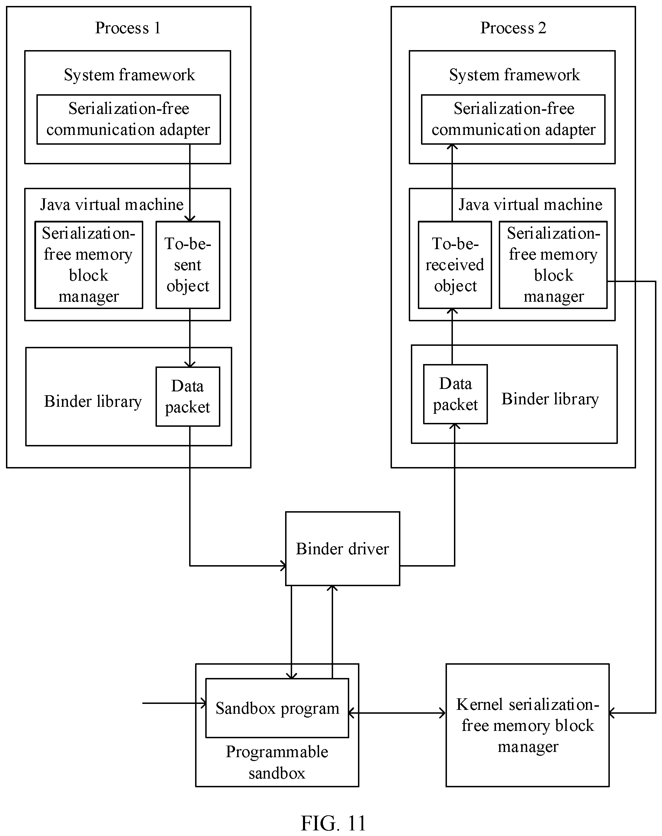

In a specific implementation, as shown in FIG. 11, FIG. 11 is a diagram of a structure of a system that supports Binder communication between Java processes for serialization-free communication according to an embodiment of this application. A process 1 and a process 2 are two Java processes. The Java process may be an application process or a system service process. This is not specifically limited in this application. Each of the two Java processes includes a Java virtual machine (ART), a binder call library (libbinder), and a system framework. The system framework includes a serialization-free communication adapter module. The Java virtual machine includes a serialization-free memory block manager. The kernel includes a Binder driver module, a programmable sandbox, and a kernel serialization-free memory block manager.

In a user mode, a sandbox program required for this serialization-free communication process is injected into the programmable sandbox. The process 1 initiates inter-process communication, obtains an original memory address and metadata of a to-be-sent object in the Java virtual machine, packages the memory address and the metadata of the to-be-sent object into a serialization-free inter-process communication data packet, and sends the data packet to the Binder driver (Binder driver) module. The Binder driver parses the data packet, and selects a matched sandbox program based on the metadata of the to-be-sent object. A sandbox program running in the programmable sandbox first traverses the to-be-sent object once based on the original memory address of the to-be-sent object, and accumulates a size of a sub-object simultaneously, to obtain a total size of the to-be-sent object. The sandbox program accesses an interface of the kernel serialization-free memory block manager, and transfers the total size of the to-be-sent object, to obtain a portion of a buffer in a heap space of the process 2. The sandbox program traverses the to-be-sent object again. When encountering a common type field, the sandbox program directly copies the field to the buffer. When encountering a reference type field, the sandbox program performs reference repair, calculates an offset in the reference repair based on the size of the to-be-sent object itself, determines a new object address in the buffer, and stores the address as a new reference field into an allocated portion of the buffer. When encountering a type field, the sandbox program performs type repair, and writes an address of a type corresponding to the process 2 into an allocated portion of the buffer. Then, a type security check is performed. When the security check succeeds, a start address of the buffer is written into a buffer in libbinder of the process 2 via the Binder driver. The ART of the process 2 reads an address and metadata of a to-be-received object that are in a received serialization-free communication inter-process data packet, and converts the address and the metadata of the to-be-received object into a common Java object based on a modified object generation procedure, so that the system framework can receive and use the common Java object via the serialization-free communication adapter.

An embodiment of this application further provides a computer program product including instructions. The computer program product may be software or a program product that includes instructions and that can run on a communication device or can be stored in any usable medium. When the computer program product runs on the communication device, the communication device is enabled to perform the serialization-free communication method shown in FIG. 4.

An embodiment of this application further provides a computer-readable storage medium. The computer-readable storage medium may be any usable medium that can be stored by a communication device, or a data communication device such as a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the communication device to perform the serialization-free communication method shown in FIG. 4.

Finally, it should be noted that the foregoing embodiments are merely intended for describing the technical solutions of the present invention, but not for limiting the present invention. Although the present invention is described in detail with reference to the foregoing embodiments, those of ordinary skill in the art should understand that they may still make modifications to the technical solutions described in the foregoing embodiments or make equivalent replacements to some technical features thereof, without departing from the protection scope of the technical solutions of the embodiments of the present invention.

## Claims

1. A mobile terminal system, wherein the system comprises a plurality of processes, and the plurality of processes communicate with each other via a shared kernel;
the kernel is configured to: run a first sandbox program in a programmable sandbox environment, determine first data based on an original memory address and metadata of a first object that are sent by a first process, and store the first data into a first buffer, wherein the first sandbox program is determined through matching from a plurality of sandbox programs based on the metadata of the first object, and the first buffer is a portion of a serialization-free memory block registered by a second process with the kernel; and
the kernel is further configured to send a start address of the first data in the first buffer to the second process, so that the second process determines a second object based on the start address of the first data in the first buffer, wherein the second object is applicable to the second process.

2. The system according to claim 1, wherein the programmable sandbox comprises one or more loaded sandbox programs in a fixed directory of the system, and one or more sandbox programs that update the loaded sandbox program, wherein each of the one or more sandbox programs is generated based on serialization and deserialization logic of process communication.

3. The system according to claim 1 or 2, wherein the kernel is specifically configured to:
traverse the first object based on the first sandbox program and the original memory address of the first object, determine a total size of the first object, and determine a size of the first buffer, wherein the total size of the first object comprises a size of the first object and a size of a sub-object referenced by the first object;
run the first sandbox program in the programmable sandbox environment, and determine the first data based on the original memory address and the metadata of the first object that are sent by the first process; and
store the first data into the first buffer.

4. The system according to claim 3, wherein the kernel is specifically configured to:
when a field in the first object is a common type field, store the common type field as the first data into the first buffer; or
when a field in the first object is a reference type field, perform reference repair based on the first sandbox program and the size of the first object to determine a new reference field, and store the new reference field as the first data into the first buffer; or
when a field in the first object is a type field and is different from a type field registered by the second process with the kernel, store a new address of a type corresponding to the second process as the first data into the first buffer, wherein the type corresponding to the second process is determined based on the type field in the first object.

5. The system according to claim 4, wherein before the kernel is configured to run the first sandbox program in the programmable sandbox environment, the second process is configured to:
register, with the kernel, an address of first metadata and the serialization-free memory block comprising a serialization-free flag, wherein the first metadata is used to record a usage status of the serialization-free memory block, and is updated by the kernel.

6. The system according to claim 5, wherein the second process is further configured to:
when it is determined, based on the first metadata, that no data is written to the serialization-free memory block any more, register a new serialization-free memory block, and remove the serialization-free flag corresponding to the serialization-free memory block, so that the serialization-free memory block is reclaimed by a garbage collection process in the second process.

7. The system according to any one of claims 4 to 6, wherein the first process is further configured to:
prevent execution of a garbage collection process in the first process, or delay execution of a reclaim phase of the garbage collection process in the first process.

8. A serialization-free communication method, applied to a mobile terminal system, wherein a plurality of processes sharing a kernel are run in the mobile terminal system, the plurality of processes communicate with each other via the kernel, and the method comprises:
running, by the kernel, a first sandbox program in a programmable sandbox environment, determining first data based on an original memory address and metadata of a first object that are sent by a first process, and storing the first data into a first buffer, wherein the first sandbox program is determined through matching from a plurality of sandbox programs based on the metadata of the first object, and the first buffer is a portion of a serialization-free memory block registered by a second process with the kernel; and
sending, by the kernel, a start address of the first data in the first buffer to the second process, so that the second process determines a second object based on the start address of the first data in the first buffer, wherein the second object is applicable to the second process.

9. A communication device, wherein the communication device comprises a processor and a memory, and the processor is configured to execute instructions stored in the memory of the communication device, so that the communication device performs the method according to claim 8.

10. A computer program product, comprising instructions, wherein when the instructions are run by a communication device, the communication device is enabled to perform the method according to claim 8.

11. A computer-readable storage medium, comprising computer program instructions, wherein when the computer program instructions are executed by a communication device, the communication device performs the method according to claim 8.
